Europäisches Patentamt

(19) European Patent Office

Office européen des brevets

(11) Publication number: 0 087 947

A2

(12) **EUROPEAN PATENT APPLICATION**

(21) Application number: 83301004.4

(22) Date of filing: 25.02.83

(51) Int. Cl.³: **G 06 F 3/02**

(30) Priority: 27.02.82 JP 31616/82

(43) Date of publication of application:
07.09.83 Bulletin 83/36

(84) Designated Contracting States:
CH DE FR GB LI

(71) Applicant: Fanuc Ltd
5-1, Asahigaoka, 3-chome
Hino-shi, Tokyo 191(JP)

(72) Inventor: Hajimu, Kishi
Hinohirayamadai-Jutaku 1104 6-7-8, Asahigaoka
Hino-shi Tokyo(JP)

(72) Inventor: Masaki, Seki
3-15-2-406, Takaidonishi, Suginami-ku
Tokyo(JP)

(72) Inventor: Kunio, Tanaka
Nishihachioji-Haitsu C-7-9 711 Sandahigashi-cho
Hachioji-shi Tokyo(JP)

(74) Representative: Billington, Lawrence Emlyn et al,
HASELTINE LAKE & CO Hazlitt House 28 Southampton
Buildings Chancery Lane
London WC2A 1AT(GB)

(54) Method and apparatus for correcting shapes.

(57) A method and apparatus for shape correction characterized by specifying a shape through designating a plurality of points on an object being measured, entering a reduction ratio for each axis of the object, and correcting the shape on the basis of each reduction ratio. Accurate shape data can be entered even if a drawing has a different reduction ratio along each axis thereof. This is made possible by correcting coordinate values in accordance with the reduction ratios entered for each axis of the drawing.

Fig. 11

97%

Reduction to 98%

# METHOD AND APPARATUS FOR CORRECTING SHAPES

This invention relates to a shape correction method and apparatus employing a coordinate input device. More particularly, but not necessarily exclusively, the invention relates to a shape correction method and apparatus well-suited for application to the creation of numerical control data.

According to a first aspect of the invention there is provided a method of shape correction employing coordinate input means, comprising the steps of:

specifying a shape by designating a plurality of points on an object being measured;

entering a reduction ratio for each axis of the object; and

correcting the shape on the basis of each reduction ratio.

According to a second aspect of the invention there is provided a method of shape correction employing coordinate input means, comprising the steps of:

specifying a graphic, drawn on a drawing, by designating a plurality of points on the graphic;

entering reduction ratios for lateral and longitudinal directions of the drawing, respectively, as well as a magnification of the drawing and coordinates serving as the center of the magnification; and

correcting the graphic on the basis of said reduction ratios, said magnification and said coordinates.

According to a third aspect of the invention there is provided an apparatus for shape correction employing coordinate input means, the apparatus being adapted and arranged to employ a method of operation comprising the steps of:

specifying a shape by designating a plurality of points on an object being measured;

entering a reduction ratio for each axis of the object; and

correcting the shape on the basis of each reduction ratio.

According to a fourth aspect of the invention there is provided an apparatus for shape correction employing coordinate input means, the apparatus being adapted and arranged to employ a method of operation comprising the steps of:

specifying a graphic, drawn on a drawing, by designating a plurality of points on the graphic;

entering reduction ratios for lateral and longitudinal directions of the drawing, respectively, as well as a magnification of the drawing and coordinates serving as the center of the magnification; and

correcting the graphic on the basis of said reduction ratios, said magnification and said coordinates.

According to a fifth aspect of the invention there is provided an apparatus for shape correction having coordinate input means, comprising:

a first register for storing X and Y coordinates defining a center of magnification;

a second register for storing coordinates of a point designated by coordinate designating means, for example of a tablet;

a third register for storing magnification of a graphic;

a fourth register for storing a reduction ratio along an X axis;

a fifth register for storing a reduction ratio along a Y axis;

means for performing an arithmetic operation based on the data stored in said first through fifth registers; and

means for correcting, by said arithmetic operation, coordinate values entered by said coordinate designating means.

In a two-dimensional digitizing apparatus such as a tablet, a three-dimensional measuring instrument, or a three-dimensional digitizing apparatus such as a machine tool profiling apparatus, numerical control (NC) data is created by digitizing directly the dimensions of the object being measured or the positions of prescribed points, and feeding the digitized quantities into an NC data creating apparatus. Since the object being measured may enlarge or shrink in size, however, the NC data created will include an error unless a correction is applied whenever such a change in article size takes place.

A drawing (the object being measured) which appears on, say, a blueprint or fabric will have a degree of shrinkage which, depending upon the properties of the paper or fabric, will not be

the same in the lateral and longitudinal (X and Y) directions. The same is true when measuring a wooden pattern, where the degree of shrinkage will differ in the directions of length, width and height, depending upon the properties of the wood. In other words, since there are cases where the shrinkage degree differs along each axis of the object being measured, it is desirable that a shape correction be effected by applying a shrinkage degree correction factor for each axis, as prescribed by the present invention.

An embodiment of the present invention may provide a novel method and apparatus capable of applying an accurate shape correction for an object being measured even if the object has a different degree of shrinkage along each axis thereof.

An embodiment of the present invention may provide a method and apparatus capable of processing a shape, which appears on a drawing, in accordance with the actual size of the original, by using shrinkage or reduction ratios and the magnification of the object being measured, relative to the original.

An embodiment of the invention may provide a method and apparatus for shape correction characterized by specifying a shape through designating a plurality of points on an object being measured, entering a reduction ratio for each axis of the object, and correcting the shape on the basis of each reduction ratio. Further, in addition to the reduction ratios, a magnification of the object relative to the original thereof / may be entered and used along with reduction ratios to allow correction of the shape in a highly accurate manner.

Other features and advantages of an embodiment of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a perspective view showing the general features of a system for creating numerical control data which is useful in describing the present invention;

Fig. 2 is a schematic view showing the external appearance of a tablet input device included in the system of Fig. 1;

Fig. 3 is an enlarged, top view of a cursor unit included in the system of Fig. 1;

Fig. 4 is a flowchart for describing, in general terms, the creation of numerical control data in accordance with the present invention;

Figs. 5 and 6 are plan views showing examples of displays presented on the CRT of a graphic display device included in the system of Fig. 1;

Figs. 7A and 7B are plan views of a tablet and drawing which are useful in describing an operation for setting an information input zone;

Figs. 8A through 8C are illustrative views of menues for designating the size of an information input zone as well as the boundaries of areas which constitute the information input zone;

Figs. 9 and 10 are plan views for describing the center of a scale;

Fig. 11 is a plan view for describing the setting of a reduction ratio;

Fig. 12 is a plan view showing another example of a display presented on the CRT of the graphic display device included in the system of Fig. 1;

Fig. 13 is an illustrative view showing the details of a menu depicted in Fig. 8;

Figs. 14 and 15 are diagrams useful in describing numerical control graphic data created in a point mode of operation;

Figs. 16, 17, and 18 are diagrams useful in describing numerical control graphic data created in a cutting mode of operation; and

Fig. 19 is a block diagram of an apparatus for practicing a shape correction method according to the present invention.

Reference will now be had to the accompanying drawings to describe a   method and apparatus for shape correction according to the present invention for a case where the invention is applied to a system designed to create NC, or numerical control, data.  The detailed construction and operation will become clear in the course of describing the creation of NC data.

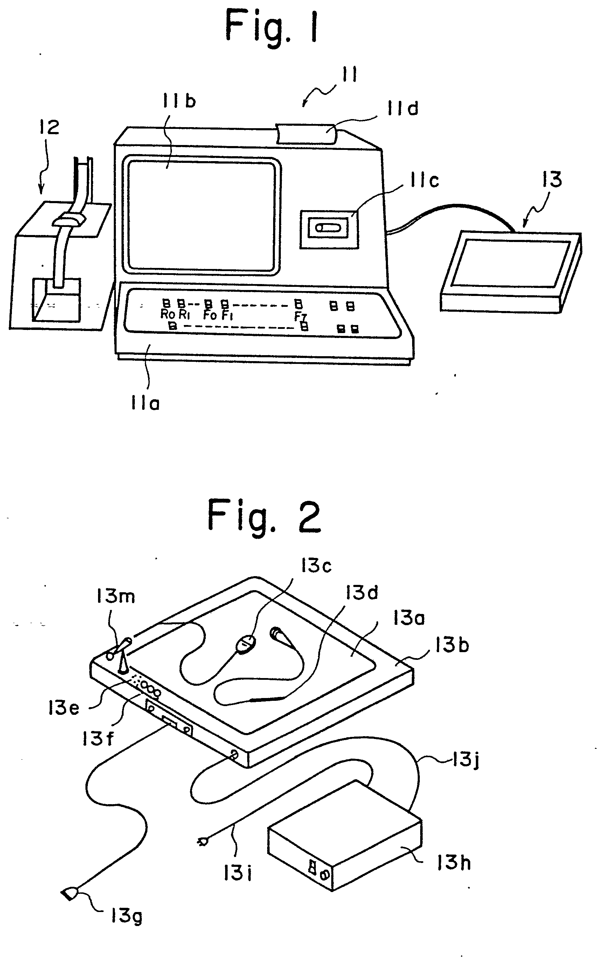

Reference will now be had to Fig. 1 showing a system for the creation of NC data.  The system includes the main body 11 of an apparatus for creating NC data.  The main body 11 comprises a keyboard 11a having a multiplicity of keys, a graphic display device 11b, a magnetic tape unit 11c for loading a magnetic tape cassette, a printer 11d, and a control unit, not shown. The latter is constituted by a microcomputer which executes processing for the input and output of information, for digitizing and for the creation of NC data, all executed by means of a tablet described hereinbelow, based on a system program stored previously in memory means such as a ROM (read-only memory).  The mulitplicity of keys provided on the keyboard 11a are for responding to prompts which appear on the system CRT, for designating system program loading, and for entering NC data.  The graphic display device 11b displays, in graphical form, coordinate values obtained by digitization of positions designated by the tablet, as well as input data, numerical values, NC data and various messages or prompts for conversational interaction with the operator. The magnetic tape unit 11c is used to enter a system program into the main body of the NC data creating apparatus 11. By way of example, when using a tablet to enter coordinate values directly from a drawing and prepare NC data, the software (system program) for digitizing processing must be fed into the main body 11. This is done by selecting the magnetic tape cassette containing the digitizing program, and loading the cassette into the magnetic tape unit 11c. To read the tape into the system, the operator need only touch a load button on the keyboard 11a after the cassette has been set in the tape unit 11c. The printer 11d is adapted to print out characters which appear on the screen of the graphic display device 11b, data punched in a paper tape, described later, and information which has been written into the loaded magnetic tape.

The system also includes a paper tape reader/puncher 12 for preparing an NC tape by punching a paper tape with perforations indicative of the NC data prepared by main body 11, and for reading NC or other data which has already been punched into an NC tape. The system tablet, designated at 13, comprises a board which uses the principle of electromagnetic induction to enter data. By relying upon a coordinate designating device such as a cursor unit or stylus pen as means for designating coordinates, the tablet 13 is operable to input positional coordinates from a drawing laid on the tablet surface, these coordinates being fed into the main body 11 as an input thereto.

The perspective view of Fig. 2 shows the external appearance of the tablet 13 in greater detail. The tablet 13 comprises a tablet main body or board 13a, a tablet cover 13b, a cursor unit 13c serving as the coordinate designating device, a stylus pen 13d, a buzzer 13e, a group of lamps 13f indicating, e.g., coordinate input mode and introduction of power, an input/output connector for connecting the tablet 13 to the main body 11, a power unit 13h for supplying the table body 13a with D.C. power, an A.C. cable 13i for connecting the power unit 13h to an A.C. source, a D.C. cable 13j for the connection between the tablet body and power unit, and a pen stand 13m for holding the stylus pen 13 when not in use. The cursor unit 13c or stylus pen 13d is used to enter coordinate and other data.

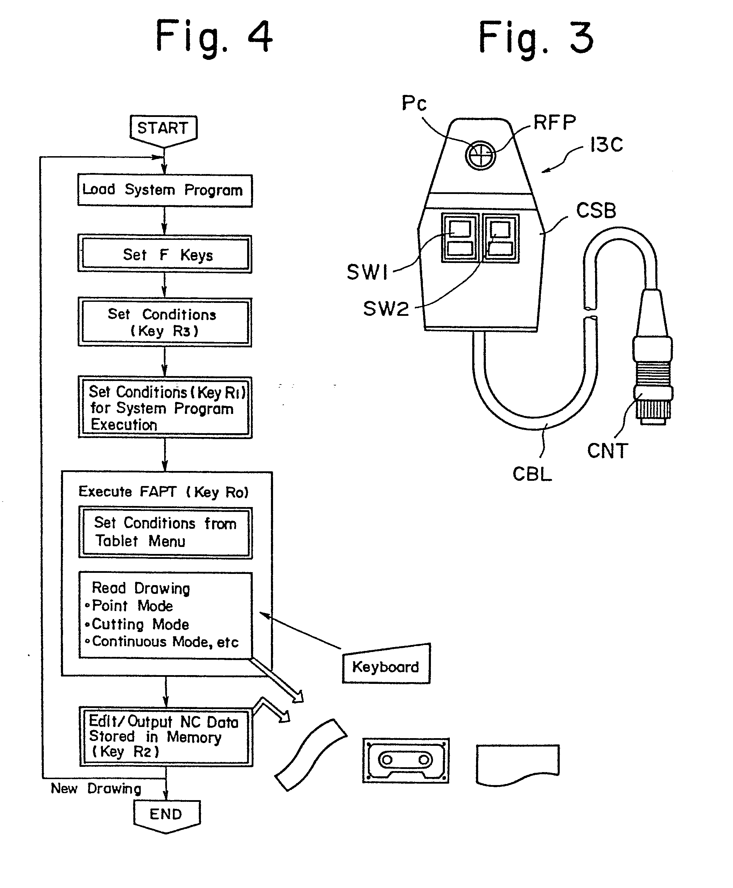

The details of the cursor unit 13c are illustrated in the enlarged view of Fig. 3, in which a top view of the cursor unit is shown. The cursor unit 13c has a main body CSB, first and second switches SW1, SW2, a position reader PR having a cross-hair arrangement, a connector CNT and a cable CNT leading from the connector CNT to the main body CSB. To enter the coordinates of a point, the intersection Pc of the cross hairs provided on the position reader PR are aligned with the desired point on a drawing laid on the tablet body, followed by depressing the first switch SW1 or second switch SW2.

A flowchart for describing the general features of an NC data creation method is depicted in Fig. 4. The method may be broadly classified into operations of preprocessing, data input, NC data editing and data output. Reference will now be had to Fig. 4 to describe the general features of NC data creation and output.

(1)  System loading step

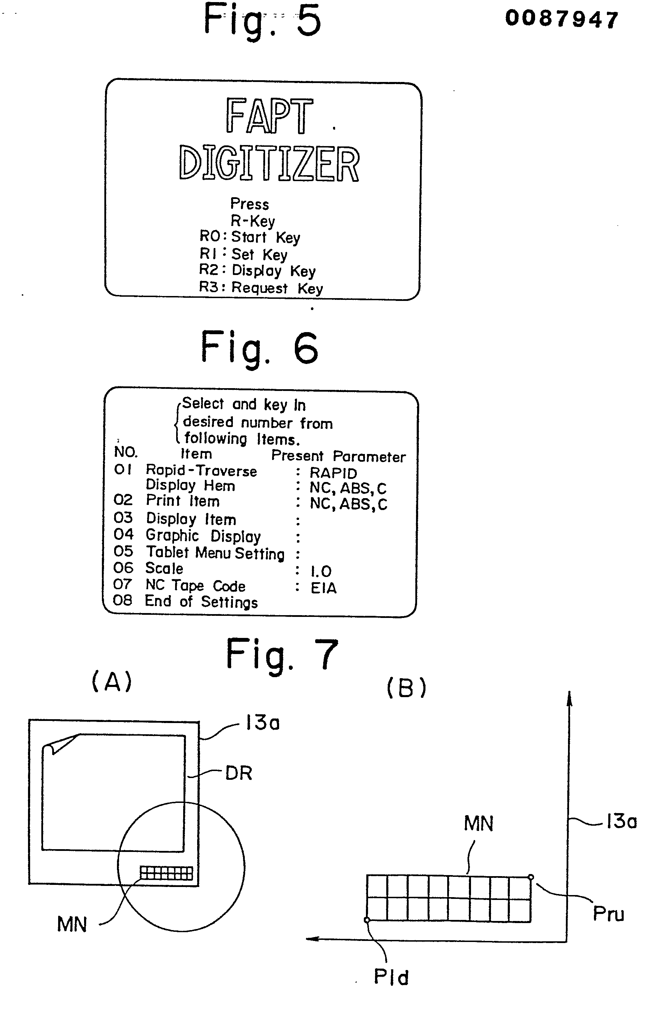

First, following the introduction of power, the operator sets the magnetic tape cassette containing the prescribed software (system program) in the magnetic tape unit 11c (Fig. 1) and touches the load button on the keyboard 11a to store the system program in a main memory incorporated within main body 11 of the system. This causes the title (e.g. FAPT DIGITIZER) of the system program, as well as a prompt calling for pressing of an R-key, to appear on the screen of the graphic display device 11b, as shown in Fig. 5.

(2)  F-Key setting step

The keyboard 11a includes an array of eight F-keys ($F_0$ to $F_7$) which remain locked in the on state when depressed. The operator, by setting the desired F-keys in the on (depressed) or off state, selects the operating mode of the tablet 13 as well as the output device to be used. Table I, shown below, gives the function and meaning of each F-key, as well as the associated subject matter. It should be noted that the F-keys can be set prior to the system loading step if desired.

(3) Step for setting initial conditions

After setting the F-keys, the operator sets the conditions for the preparation of an NC tape. Specifically, four ($R_0$ to $R_4$) of the abovementioned R-keys are provided on the keyboard 11a. First, the operator depresses the $R_3$ key, causing the prompt "REQUEST = " to appear at the lower left side of the CRT screen. The operator responds to the prompt by setting and entering conditions in accordance with predetermined rules, and then depresses an NL key, located on the keyboard 11a, two consecutive times. This restores the CRT screen to the display depicted in Fig. 5 and ends the condition setting processing. The conditions which can be set are, e.g., machine tool parameters, input/output units (English or metric system, etc.) and special codes. The machine tool parameters may include the name of each axis of movement (X, Y, Z...), the minimum unit set for each axis of movement, and G-function instruction codes (indicating quick feed, linear cutting feed, clockwise and counter-clockwise circular interpolation, absolute command and incremental commands, etc.).

(4) Step for setting execution conditions

TABLE I

| Key Symbol | Function | Subject | Meaning |
|---|---|---|---|
| $F_o$ | Input | Test Mode | To constantly display coordinate values sensed by tablet |
| $F_1$ | " | Input Data Confirmation Mode | To confirm coordinate values sensed by tablet, and to change coordinate values when required |
| F2 | Output | Output Mode | When F2 is ON, to establish step feed during NC data output and enable both insertion and deletion of data |
| $F_3$ | ". | CRT Characters | To display list of, e.g., NC data, on CRT |
| F4 | " | CRT Graphics | To display graphically, on CRT, coordinate values entered by tablet |
| F5 | " | Printer | To print out, via printer, list of results of FAPT execution |
| F6 | " | Paper Tape | To punch NC command data into paper tape |
| F7 | " | MT Cassette | To write NC command data into magnetic tape cassette |

Next, the operator depresses the $R_1$ key to set various conditions for system program execution. The information shown in Fig. 6 will appear on the CRT screen of the graphic display device 11b when the $R_1$ key is depressed. Now, in accordance with the conditions which are desired to be set, the operator may select one of the eight items numbered 01 to 08 shown in Fig. 6. When one of the item numbers is keyed in, a prompt appears on the display screen for each of various conditions to be set with regard to the entered item number. When the operator has successively entered the set conditions in response to the prompts, the entry of conditions with regard to the particular item number ends. The operator then depresses the NL key a number of times in succession to return the CRT screen to the display shown in Fig. 6, upon which he may set the conditions for a new item number. Table II shown below gives the meaning of each numbered item.

TABLE II

| No. | Item | Meaning |
|---|---|---|
| 1 | Rapid-traverse Tool Path Display | To designate whether rapid-tra-verse motion should be displayed |
| 2. | Print Item | Item to be printed |
| 3. | Display Item | Item to be displayed on CRT |
| 4. | Graphic Display | Scale and position of graphic displayed on CRT |
| 5. | Tablet Menu position | To designate menu position on tablet |
| 6. | Scale | To designate scale and scale reduction ratio for read coordinate values |
| 7. | NC tape code | NC tape output code |
| 8. | | End of setting operation |

In Table II, Item No. 1 designates whether rapid-traverse motion, namely the path of a tool in the rapid-traverse mode, is to be displayed. Entering "RAPID" opposite this item number will cause the path to be displayed. Item Nos. 2 and 3 are for selecting print and display items, respectively. Prescribed outputs can be printed or displayed by entering the parameters shown in the left column of Table III, included hereinbelow. In order for an output to be capable of print out or display, it is necessary that either key $F_2$ or key $F_3$ of the eight F-keys be placed in the ON state.

Item No. 5 is provided for setting a menu position (information input zone) on the tablet. Since the tablet has the capability of identifying designated points, it can also be made to function as a switch if a portion of the tablet surface is partitioned into a plurality of areas and each area is assigned a specific meaning. For example, if a certain area is set to serve as an absolute command area, designating said area will cause the NC data creating apparatus to create NC data in the form of absolute values from then on.

TABLE III

| Parameter | Meaning |
|---|---|
| NC | To output content of created NC tape |
| ABS | To output absolute value for each axis |
| C | To output center and radius of circle during circular interpolation |
| PART | To output content of created part program |

To enter graphic data, a design drawing is laid on the tablet surface and the position of a predetermined point on the drawing is entered by designating the point. When a portion of the tablet surface (specifically an information input zone described below) which is to made to function as a switch or data input key is fixed in area or position, there will be occasions where said information input zone of the tablet surface is covered by the design drawing diagram because of the size of the design drawing or the type of design. In such case, the tablet will not be able to discriminate whether a certain designated area on the tablet surface is a point on the design or an area which is to function as a switch or data input key. While there are also instances where the graphic itself will not overlay the switch function zone on the tablet surface, inconveniences can still be encountered because this part of the tablet surface may be covered by a blank portion of the drawing.

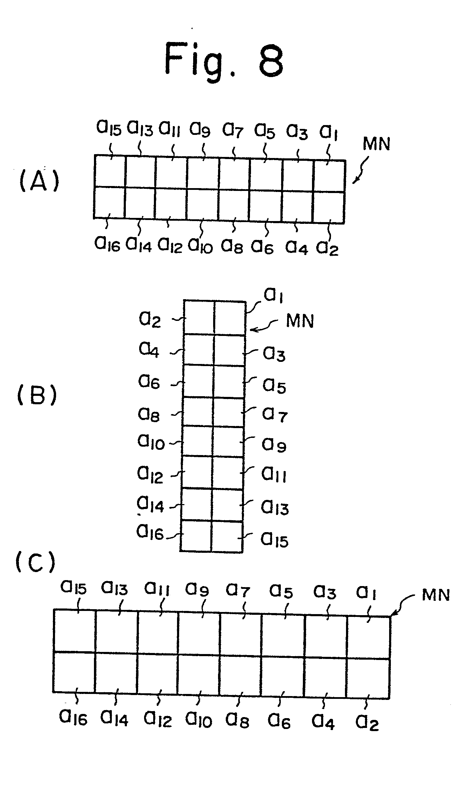

In view of the foregoing problem, and according to the present embodiment of the invention, any area on the tablet surface can be made to serve as an information input zone through use of Item No. 5 mentioned above. This will now be described with reference to Fig. 7, which is useful in explaining how an information input zone is set, and with reference to Fig. 8 showing examples of menu configurations for designating the size of the information input zone, the boundaries of areas $a_1$

through $a_{16}$ constituting the zone, and the meaning of each area. A menu MN, printed on, e.g., white paper or wax paper, may have a horizontal configuration composed of 16 areas $a_1$ through $a_{16}$ in a two-row by eight-column array, as depicted in Figs. 8A and 8C, or a vertical configuration composed of 16 areas $a_1$ through $a_{16}$ in an eight-row by two-column array, as shown in Fig. 8B. The size of an information input zone depends upon the size of the menu and can be set at will. The menu MN in Fig. 8C, for example, takes up more space than the menu in Fig. 8A. The numbers of rows and columns also can be set as desired.

An information input zone is set through the following sequence, described with reference to Fig. 7, in which (B) is an enlarged view of the portion enclosed by the circle in (A):

Initially, a drawing DR is laid on the tablet surface 13a and affixed thereto by adhesive tape or the like, after which the menu MN is similarly laid on and affixed to the tablet surface 13a, at a portion thereof not covered by the drawing DR, as shown in Fig. 7. When the operator selects Item No. 5 (Fig. 6) under these conditions, the following prompt appears on the CRT screen:

UPPER RIGHT = □ , □

thereby inquiring about the position of the upper right portion of the menu MN. The operator responds by positioning the cross-hair intersection $P_c$ of the position reader, provided on the cursor unit 13c (Fig. 3), at the upper right corner $P_{ru}$ of the menu MN, shown in Fig. 7B, followed by depressing one of the switches SW1, SW2. This causes the X, Y coordinates $(X_1,Y_1)$ of the point $P_{ru}$ to be fed into the system. Next, the following prompt is displayed:

LOWER LEFT = □ , □

calling for the entry of the point $P_{ed}$ at the lower left corner of the menu MN. As described above, the operator now places the cross-hair intersection $P_c$ of the cursor unit 13c at the point $P_{ld}$ and depresses one of the switches SW1, SW2 to enter the X, Y coordinates $(X_2,Y_2)$ of the point $P_{ld}$.

Distance x along the X axis and distance y along the Y-axis are expressed by the following, respectively:

$$x = X_1-X_2, \qquad y = Y_1-Y_2 \quad . . . . . . (1)$$

Accordingly, the menu will be of the horizontal type if $x \geq y$ holds, and of the vertical type if $x < y$ holds. Thus the type of menu is decided by the magnitudes of x, y. If a horizontal menu is set in advance to have two rows and eight columns and a vertical menu is set in advance to have eight rows and two columns, by way of example, then, in the case of Fig. 7, $x > y$ will hold (horizontal menu), and the horizontal and vertical dimensions x', y', respectively, of each area will be:

$$x' = (X_1-X_2)/8, \quad y' = (Y_1-Y_2)/8 \quad . . . (2)$$

thereby specifying the boundaries of the areas $a_1$ through $a_{16}$. This ends the processing for setting an information input zone.

Returning to Table II, Item No. 6, constituting a feature of the present invention, is for designating scale (magnification) and paper reduction ratio (also referred to as ratio of shrinkage) for read coordinate values. Generally, an object shown on a drawing is not drawn to actual size, i.e., small objects are drawn large and large objects small. Also, depending upon the paper used, paper length and width may enlarge or contract on the order of several percent during copying. Many copying machines, moreover, have a magnification and reduction function for magnifying or reducing the information appearing on the drawing. The shape of an object appearing on a drawing must therefore be processed in accordance with the actual size of the original.

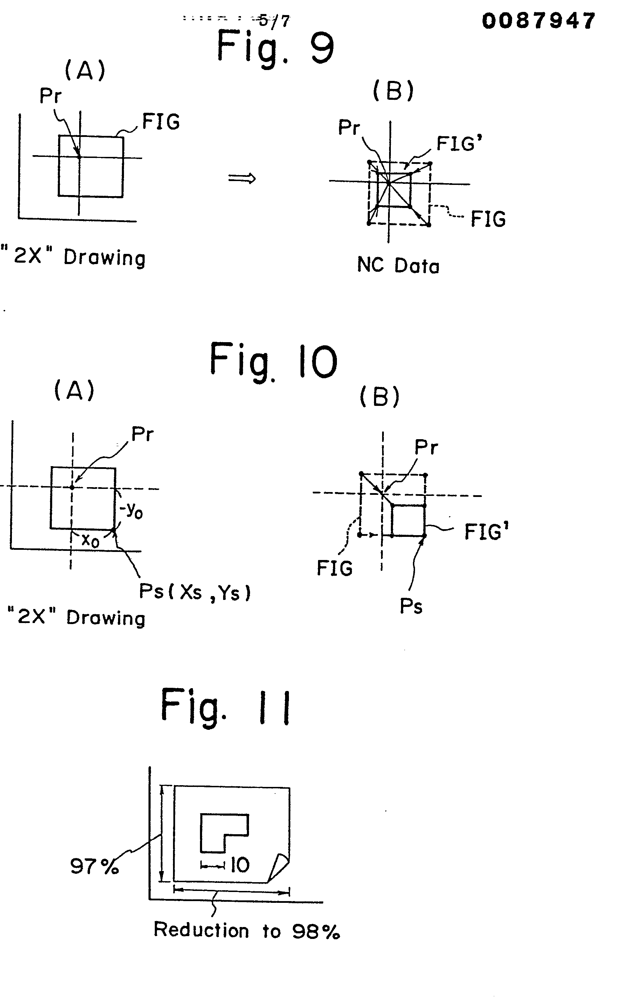

To this end, the operator selects Item No. 6 (Fig. 6), whereupon the inquiry "SCALE = " appears on the CRT screen, calling for the entry of scale (magnification). The operator responds by entering the magnification shown on the drawing. For example, if the drawing states a magnification of "2X", then the operator enters "2.0" from the keyboard. Note that the point adopted as the center of the scale (magnification) is that used when the origin, or reference point, of the NC data coordinate system is designated. Said point is entered by the cursor unit. Figs. 9 and 10 are useful in describing the center of the scale. Assume that a point Pr on a drawing specifying a magnification of "2X" (Fig. 9A) is to be taken as the reference point of the NC data coordinate system. The operator, taking the cursor unit 13c (Fig. 3) in hand, aligns the cross-hair intersection Pc of the position reader PR with the point Pr and then presses either the first switch SW1 or second switch SW2 to enter Pc as the coordinate system reference point. The operator also enters the scale, which is "2.0" in the present case, and thenceforth enters each point that is specified on the drawing. The shape specified in this fashion, denoted FIG in Fig. 9A, is interpreted by the NC data creating apparatus as being the shape FIG' shown in Fig. 9B. In other words, in the example of Fig. 9, the system takes the point Pr as the center of the scale.

Next, assume that the point Pr on the drawing specifying a magnification of "2X" is to be taken as the reference point of the NC data coordinate system, but that a point Ps is used to enter the point Pr, as shown in Fig. 9A. In this case, point Ps become the center of the scale. The operator, taking the cursor unit 13c (Fig. 3) in hand, now aligns the cross-hair intersection Pc of the position reader PR with the point Ps and then presses either the first switch SW1 or second switch SW2 to enter the coordinates of said point, which is a point in the tablet coordinate system. Next, using the keyboard, the operator enters the displacements along the X and Y axes (namely $x_o$, $-y_o$) from the point Ps to the reference point Pr of the NC data coordinate system to specify the point Pr. This establishes point Ps as the center of the scale. The result is that the graphic FIG of Fig. 10A, entered from the drawing specifying a magnification of "2X", is interpreted by the NC data creating apparatus as being the shape FIG' shown in Fig. 10B. In other words, in the example of Fig. 10, the positional relation of Ps with respect to Pr is the same in both A and B.

After the operator enters the scale, an inquiry appears on the CRT screen regarding reduction ratio (ratio of shrinkage) with respect to the horizontal and vertical axes of the tablet coordinate system. The operator responds by entering a percentage which takes into consideration either or both of the rate of change (%) in the drawing dimensions owing to expansion or shrinkage of the paper, or the copying magnification. For example, the following prompts will appear on the screen of the CRT:

"X-AXIS REDUCTION RATIO =  "

"Y-AXIS REDUCTION RATIO =  "

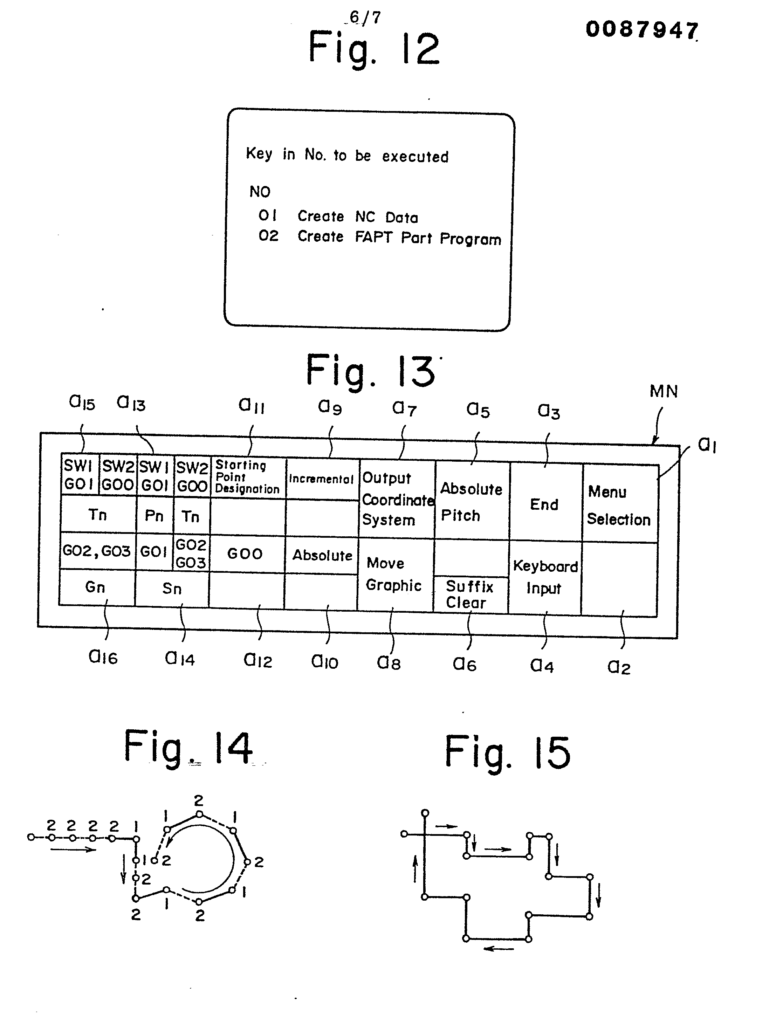

in response to which the operator enters, say, 98% and 97%, respectively, assuming that these figures are indicative of contraction to 98% and 97% along the horizontal and vertical axes, as illustrated in Fig. 11. The NC data creating apparatus therefore reads in 98% and 97% as the reduction ratios, so that a subsequently entered graphic will undergo a size reduction to 98% along the horizontal axis and 97% along the vertical axis.

Again returning to Table II, Item No. 7 is for entering an NC tape output code, allowing selection and entry of either an EIA code or ISO code.

(5)   Coordinate Value Input Step

When the condition setting processing for execution of the system program is completed by the foregoing operations, the system is ready to accept entry of various data for NC tape preparation.  It should be noted that the display of Fig. 5 reappears on the CRT with the conclusion of processing in step (4) (i.e., by entering Item No. 8).  The operator now touches key $R_O$ on keyboard 11a to initiate processing in accordance with the system program.  More specifically, with a touch of key $R_O$, the CRT displays a prompt calling for either NC data (NC tape) creation or part program creation, as shown in Fig. 12.  The operator enters "01" to execute processing for the creation of NC data, or "02" to execute processing for the creation of a part program.  The following discussion will deal with selection of "01", namely NC data creation.

Next, the operator enters various data for NC data creation.  Such data may consist of (a) mode data such as point mode, linear cutting mode and circular arc cutting mode, and (b) point data relating to points on a drawing. The mode data is entered by designating, through use of the cursor unit, a predetermined area on the information input zone established in step (4).

Fig. 13 illustrates the details of a horizontal-type menu MN used in setting an information input zone, in which each area is assigned boundary lines and as well as a particular meaning. The areas $a_{12}$, $a_{13}$, $a_{14}$, $a_{15}$, $a_{16}$ are mode selection areas. Area $a_1$ is a menu selection area which must always be designated before selecting a new mode. The areas $a_{12}$, $a_{13}$ are areas for designating a point mode, and the areas $a_{14}$, $a_{16}$ are for designating linear and circular arc cutting modes.

The point mode is a mode in which points are entered one at a time to create cutting-feed/rapid-traverse NC data. Selecting the point mode makes it possible to enter points from a drawing by using the tablet. In other words, assume that the operator selects area $a_{12}$ or $a_{13}$ to establish the point mode, places the cross-hair intersection $P_c$ of the cursor unit 13c on prescribed position on the tablet surface and presses the first switch SW1 or second switch SW2 (Fig. 3). This will create an item of NC data for rapid-traverse or cutting-feed movement from the previous position to the just indicated position. When the operator restores switch SW1 or switch SW2 to the original position, moves the cursor unit to another position on the design drawing and then again presses switch SW1 or switch SW2, this creates an item of rapid-traverse or cutting-feed NC data for movement up to said position. By repeating this operation, the operator may enter successively an item of cutting-feed/rapid-traverse data with respect to each separately entered position (i.e., the coordinate values of the position). Note that when area $a_{12}$ is selected, an item of rapid-traverse NC data is created regardless of which of the first and second switches SW1, SW2 is pressed. When area $a_{13}$ is selected, however, an item of cutting-feed NC data is created when switch SW1 is pressed, and an item of rapid-traverse NC data when switch SW2 is pressed.

Fig. 14 shows an example of a graphic which is entered in the point mode by selecting area $a_{13}$ and designating a series of points on a drawing one after another using the cursor unit while selectively pressing switch SW1 or SW2 at each point. In Fig. 14, the dotted lines indicate the creation of NC data for rapid-traverse, while the solid lines indicate the creation of NC data for linear cutting. Each numerical value "1" indicates when the first switch SW1 was pressed, and each numerical value "2" shows when the second switch SW2 was pressed.

As opposed to the point mode, the cutting mode is one in which an item of linear cutting data or circular arc cutting data is created on the basis of each successively entered point (coordinate values).
Selecting the cutting mode of operation makes it
possible to enter points from a drawing by using the
tablet 13a. The following will serve as examples:

(a) To create NC data for linear cutting: The
operator selects area $a_{14}$, aligns the cross-hair
intersection $P_C$ of the cursor unit 13c with a
prescribed position on the tablet 13a and presses
switch SW1. This causes the creation of an item of
linear cutting data for movement from the immediately
preceding position designated by the cursor unit 13c to
the newly designated position. It the operator then
moves the cursor unit 13c to another position on the
tablet surface and presses switch SW1, then this will
again produce an output of linear cutting data for
movement to said position. Repeating this operation
will create NC data for cutting a workpiece by causing
a tool to move along a contour of the kind shown in
Fig. 15.

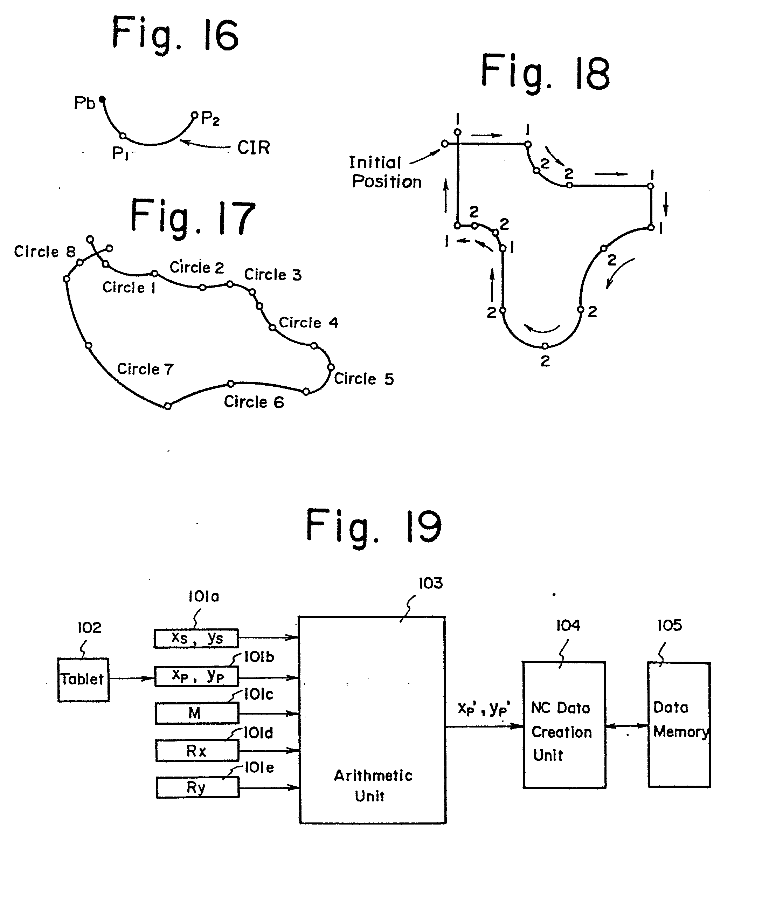

(b) To create NC data cutting circular arcs: The
operator selects area $a_{14}$, aligns the cross-hair
intersection $P_C$ of the cursor unit 13c with a
prescribed position P1 (Fig. 16) on the tablet 13a,
presses switch SW2, moves the cursor unit 13c to
another position p2 on the tablet and again presses
switch S2. The entry of the abovementioned two points
forms a circular arc CIR from an immediately preceding
point Pb and the two newly entered points P1, P2,

thereby creating NC data for circular interpolation. By repeating the above operation, the operator creates successive items of NC data for interpolating circular arcs connected as shown in Fig. 17. The selected arcs each pass through three points. Whether an arc is a clockwise or counter-clockwise arc is determined automatically by the points entered. If area $a_{16}$ is selected, then circular arc cutting data will be created regardless of whether switch S1 or S2 is pressed.

(c) To create NC data for mixed linear and arc cutting by combining operations (a) and (b): Fig. 18 illustrates a shape based on NC data for mixed linear and arc cutting, created by combining operations (a) and (b).

A block diagram of an apparatus for correcting shapes in accordance with the present invention is illustrated in Fig. 19. The apparatus includes a first register 101a for storing the X and Y coordinates $(x_s, y_s)$ of the scale center $P_r$ (Figs. 9 and 10), a second register 101b for storing the coordinates $(x_p, y_p)$ of a point designated by the cursor unit of a tablet 102, a third register 101c for storing magnification (scale) M, a fourth register 101d for storing reduction ratio Rx (%) along the X axis, and a fifth register 101e for storing reduction ratio Ry (%) along the Y axis. Also included is an arithmetic unit 103 which performs the following operations, based on the data stored in the first through fifth registers 101a through 101e, for correcting coordinate values $(x_p, y_p)$, entered by the cursor unit, into coordinate values $x_p'$, $y_p'$, and for producing an output indicative of these corrected coordinate values:

$$x_p' = x_s + (\frac{x_s - x_p}{M}) \cdot \frac{1}{\ell_x} \qquad (3)$$

$$y_p' = y_s + (\frac{y_s - y_p}{M}) \cdot \frac{1}{\ell_y} \qquad (4)$$

The output indicative of $x_p'$, $y_p'$ is applied to an NC data creating unit 104 for creating NC data based on these coordinate values. The created NC data is stored in a data memory 105.

According to the present invention, accurate shape data can be entered even if, for example, /a drawing has a different reduction ratio along each axis thereof. This is made possible by correcting coordinate values in accordance with reduction ratios entered for each axis of the drawing.

As many apparently widely different embodiments of the invention can be made without departing from the spirit and scope thereof, it is to be understood that the invention is not limited to the specific embodiments thereof except as defined in the appended claims.

In general terms there is provided

/ a method and apparatus for shape correction characterized by specifying a shape through designating a plurality of  points on an object being measured, entering a reduction ratio for each axis of the object, and correcting the shape on the basis of each reduction ratio.  Accurate shape data can be entered even if a drawing has a different reduction ratio along each axis thereof.  This is made possible by correcting coordinate values in accordance with the reduction ratios entered for each axis of the drawing.

CLAIMS:

1. A method of shape correction employing coordinate input means, comprising the steps of:

specifying a shape by designating a plurality of points on an object being measured;

entering a reduction ratio for each axis of the object; and

correcting the shape on the basis of each reduction ratio.

2. The method according to claim 1, further comprising the steps of:

entering a magnification of the object relative to the original thereof, and

correcting the shape based on each reduction ratio and on the magnification.

3. A method of shape correction employing coordinate input means, comprising the steps of:

specifying a graphic, drawn on a drawing, by designating a plurality of points on the graphic;

entering reduction ratios for lateral and longitudinal directions of the drawing, respectively, as well as a magnification of the drawing and coordinates serving as the center of the magnification; and

correcting the graphic on the basis of said reduction ratios, said magnification and said coordinates.

4.     An apparatus for shape correction empleying coordinate input means, the apparatus being adapted and arranged to employ a method of operation comprising the steps of:

specifying a shape by designating a plurality of points on an object being measured;

entering a reduction ratio for each axis of the object; and

correcting the shape on the basis of each reduction ratio.

5.     An apparatus according to claim 4, *the apparatus being adapted and arranged to employ a method of operation* further comprising the steps of:

entering a magnification of the object relative to the original thereof, and

correcting the shape based on each reduction ratio and on the magnification.

6.     An apparatus for shape correction employing coordinate input means, the apparatus being adapted and arranged to employ a method of operation comprising the steps of:

specifying a graphic, drawm on a drawing, by designating a plurality of points on the graphic;

entering reduction ratios for lateral and longitudinal directions of the drawing respectively, as well as a magnification of the drawing and coordinates serving as the center of the magnification; and

correcting the graphic on the basis of said reduction ratios, said magnification and said coordinates.

7.     An apparatus for shape correction having coordinate input means, comprising:

a first register for storing X and Y coordinates defining a center of magnification;

a second register for storing coordinates of a point designated by coordinate designating means/of a <sup>for example</sup> tablet;

a third register for storing magnification of a graphic;

a fourth register for storing a reduction ratio along an X axis;

a fifth register for storing a reduction ratio along a Y axis;

means for performing an arithmetic operation based on the data stored in said first through fifth registers; and

means for correcting, by said arithmetic operation, coordinate values entered by said coordinate designating means.

8. The apparatus according to claim / , further comprising a numerical control data creating unit for creating numerical control information based on the corrected coordinate values.

9. The apparatus according to claim 8, further comprising a data memory for storing said created numerical control data.

# Fig. I

# Fig. 2

# Fig. 4

# Fig. 3

START

Load System Program

Set F Keys

Set Conditions
(Key R3)

Set Conditions (Key R1)
for System Program
Execution

Execute FAPT (Key Ro)

Set Conditions from
Tablet Menu

Read Drawing
○ Point Mode
○ Cutting Mode
○ Continuous Mode, etc

Keyboard

Edit/Output NC Data
Stored in Memory
(Key R2)

New Drawing

END

Pc

RFP

I3C

CSB

SW1

SW2

CNT

CBL

# Fig. 5

FAPT
DIGITIZER

Press
R-Key
RO: Start Key
RI: Set Key
R2: Display Key
R3: Request Key

# Fig. 6

Select and key in
desired number from
following Items.

| NO. | Item | Present Parameter |
|-----|------|-------------------|
| OI | Rapid-Traverse | : RAPID |
| | Display Hem | : NC, ABS, C |
| O2 | Print Item | : NC, ABS, C |
| O3 | Display Item | : |
| O4 | Graphic Display | : |
| O5 | Tablet Menu Setting | : |
| O6 | Scale | : I.O |
| O7 | NC Tape Code | : EIA |
| O8 | End of Settings | |

# Fig. 7

(A)

13a

DR

MN

(B)

MN

13a

Pru

Pld

# Fig. 8

(A)

$a_{15}$ $a_{13}$ $a_{11}$ $a_9$ $a_7$ $a_5$ $a_3$ $a_1$ ⟋MN

$a_{16}$ $a_{14}$ $a_{12}$ $a_{10}$ $a_8$ $a_6$ $a_4$ $a_2$

(B)

$a_1$ / MN
$a_2$ —
$a_4$ — $a_3$
$a_6$ — $a_5$
$a_8$ — $a_7$
$a_{10}$ — $a_9$
$a_{12}$ — $a_{11}$
$a_{14}$ — $a_{13}$
$a_{16}$ — $a_{15}$

(C)

$a_{15}$ $a_{13}$ $a_{11}$ $a_9$ $a_7$ $a_5$ $a_3$ $a_1$ ⟋MN

$a_{16}$ $a_{14}$ $a_{12}$ $a_{10}$ $a_8$ $a_6$ $a_4$ $a_2$

# Fig. 9

(A)

Pr

FIG

⇒

"2X" Drawing

(B)

Pr

FIG'

FIG

NC Data

# Fig. 10

(A)

Pr

-y₀

x₀

Ps(Xs,Ys)

"2X" Drawing

(B)

Pr

FIG'

FIG

Ps

# Fig. 11

97%

10

Reduction to 98%

# Fig. 12

0087947

Key in No. to be executed

NO
  01   Create NC Data
  02   Create FAPT Part Program

# Fig. 13

| $a_{15}$ | $a_{13}$ | | | $a_{11}$ | $a_9$ | $a_7$ | $a_5$ | $a_3$ | MN $a_1$ |
|---|---|---|---|---|---|---|---|---|---|
| SW1 GO1 | SW2 GOO | SW1 GO1 | SW2 GOO | Starting Point Designation | Incremental | Output Coordinate System | Absolute Pitch | End | Menu Selection |
| Tn | | Pn | Tn | | | | | | |
| GO2,GO3 | | GO1 | GO2 GO3 | GOO | Absolute | Move Graphic | | Keyboard Input | |
| Gn | | Sn | | | | | Suffix Clear | | |

$a_{16}$   $a_{14}$   $a_{12}$   $a_{10}$   $a_8$   $a_6$   $a_4$   $a_2$

# Fig. 14

# Fig. 15

# Fig. 16

# Fig. 18

# Fig. 17

# Fig. 19